(19) Europäisches Patentamt
European Patent Office
Office européen des brevets

(11) Numéro de publication : **0 334 778 B1**

# (12) FASCICULE DE BREVET EUROPEEN

(45) Date de publication du fascicule du brevet : **15.04.92 Bulletin 92/16**

(51) Int. Cl.$^5$ : **C08G 73/14**

(21) Numéro de dépôt : **89420104.5**

(22) Date de dépôt : **23.03.89**

(54) **Polyamide-imides aromatiques fonctionnalisés par des groupes alkenyloxy, un procédé pour leur préparation et leur emploi pour notamment préparer des polymères réticulés.**

(30) Priorité : **24.03.88 FR 8804136**

(43) Date de publication de la demande : **27.09.89 Bulletin 89/39**

(45) Mention de la délivrance du brevet : **15.04.92 Bulletin 92/16**

(84) Etats contractants désignés : **AT BE CH DE ES FR GB IT LI LU NL SE**

(56) Documents cités : **PATENT ABSTRACTS OF JAPAN, vol. 11, no. 167 (C-425)[2614], 28 mai 1987; & JP-A-61 293 966 (SUMITOMO CHEM. CO. LTD) 24-12-1986**

(73) Titulaire : **RHONE-POULENC CHIMIE
25, quai Paul Doumer
F-92408 Courbevoie Cédex (FR)**

(72) Inventeur : **Michaud, Philippe
19 Rue du Tonkin
F-69100 Villeurbanne (FR)**
Inventeur : **Camberlin, Yves
68 bis quai Clémenceau
F-69300 Caluire (FR)**

(74) Mandataire : **Trolliet, Maurice et al
RHONE-POULENC CHIMIE Service Brevets Chimie Centre de Recherches des Carrières
B.P. 62
F-69192 Saint-Fons Cédex (FR)**

EP 0 334 778 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne de nouveaux polyamide-imides aromatiques dont les chaînes comportent des groupements terminaux de type alkényloxy. Elle concerne également un procédé de préparation de ces polyamide-imides fonctionnalisés en bout de chaînes. Elle a trait encore à leur utilisation pour notamment préparer des polymères réticulés.

On a déjà décrit dans la demande japonaise JA-A-61/293.966 des polyamide-imides à groupements terminaux du type alkényloxy qui sont obtenus en enchaînant les étapes suivantes : réaction de condensation en solution entre, notamment, le chlorure d'un monoanhydride d'acide tricarboxylique, une amine primaire aromatique hydroxylée et éventuellement une diamine biprimaire aromatique ; puis réaction d'éthérification effectuée, à l'aide d'un halogénure d'allyle, sur les groupements terminaux hydroxyles des oligomères formés à l'issue de la réaction de condensation. Toutefois, la mise en oeuvre d'un pareil procédé présente plusieurs inconvénients. Un de ces inconvénients, commun à la plupart des procédés où l'on fait réagir un réactif aminé avec un composé organique carbonylé comme un anhydride d'acide carboxylique, consiste dans la nécessité de réaliser la déshydratation cyclisante des (poly)amides-acides formés intermédiairement ; en effet, cette réaction étant équilibrée, il faut éliminer l'eau libérée et cette opération ne peut généralement pas être effectuée de manière complète en solution. Un autre inconvénient est lié à l'existence de la réaction d'éthérification dont on a parlé ci-avant; cette réaction est conduite en présence d'un agent basique fort comme du méthylate de sodium et pareille condition n'est pas favorable à la stabilité des cycles imides, apportés par les oligomères déjà formés, qui peuvent s'ouvrir au moins en partie et entraîner de ce fait une dégradation des polyamide-imides désirés.

Il a maintenant été trouvé, et c'est ce qui constitue l'objet de la présente invention, de nouveaux polyamide-imides fonctionnalisés en bout de chaînes par des groupements alkényloxy qui, de plus, peuvent être préparés par un procédé ne présentant pas les inconvénients mentionnés ci-avant pour les procédés de l'art antérieur. Dans ce procédé, la cyclisation et la polymérisation simultanée conduisant à la formation directe de polyamide-imides fonctionnalisés linéaires s'accompagnent d'un dégagement de dioxyde de carbone, produit très volatil, qui ne risque pas d'altérer le polymère déjà formé ; en outre, dans ce procédé, il n'est pas nécessaire de faire appel à une réaction d'éthérification pendant la polymérisation.

Plus précisément, la présente invention concerne de nouveaux polyamide-imides aromatiques linéaires dont les chaînes comportent des groupements alkényloxy terminaux, caractérisés en ce qu'ils répondent à la formule suivante :

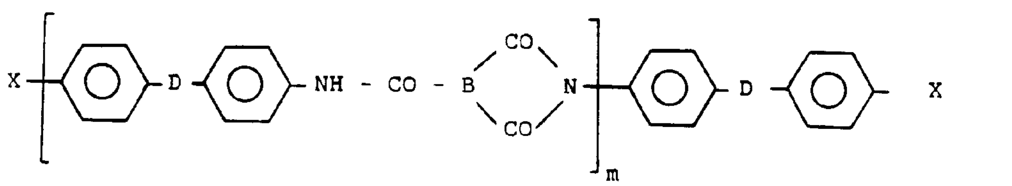 (I)

dans laquelle :

– les symboles D, identiques, représentent chacun un lien valentiel simple ou un groupement :

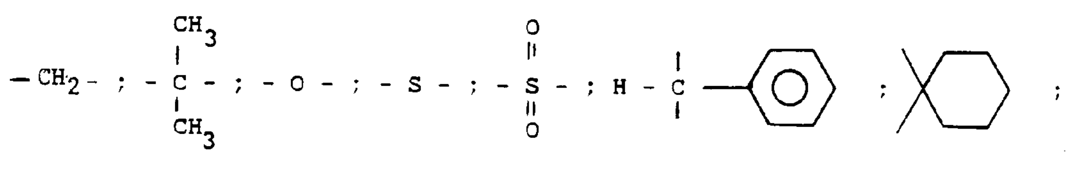

– le symbole B représente un radical trivalent consistant dans un radical aromatique possédant au moins 6 atomes de carbone, substitué ou non, ou dans deux de ces radicaux reliés entre eux par un lien valentiel simple ou un groupement :

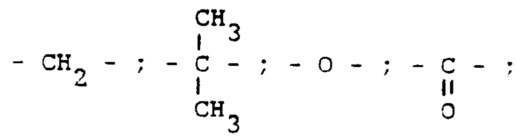

– le symbole m représente le nombre moyen des unités de récurrence ; ce nombre est au moins égal à 1 et il se situe plus précisément dans l'intervalle allant de 1 à 10 ;

– les symboles X, identiques, représentent chacun un radical de formule :

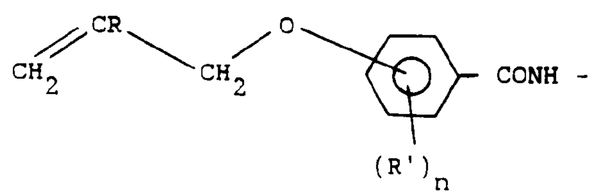 (II)

dans laquelle :

* R représente un atome d'hydrogène ou un radical méthyle ;

* le radical (méth)allyloxy est en position ortho, méta ou para par rapport à l'atome de carbone du cycle benzénique relié au groupe CONH ;

* R' représente un radical méthyle ;

* n est un nombre entier égal à 0,1, 2 ou 3.

Les polyamide-imides conformes aux définitions précédentes peuvent être préparés avantageusement par chauffage, en opérant à une température allant de 50°C à 200°C et en présence d'un solvant organique ou mélange de solvants organiques, des réactifs (i), (2i) et (3i) suivants, lesdits réactifs étant mis à réagir simultanément :

– (i) est un diisocyanate de formule :

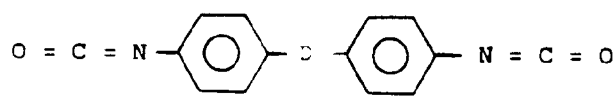 (III)

dans laquelle D a la signification donnée ci-avant dans la formule (I) ;

– (2i) est un monoanhydride d'acide tricarboxylique de formule :

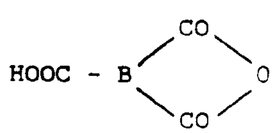 (IV)

dans laquelle B a la signification donnée ci-avant dans la formule (I) ; et

– (3i) est un monoacide carboxylique substitué par un groupe alkényloxy sur le reste attaché au groupe carboxy, de formule :

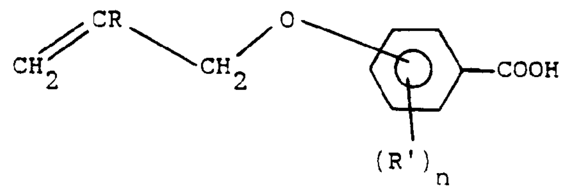

(V)

dans laquelle les symboles R, R′ et n ont les significations données ci-avant dans la formule (II) ;

– les proportions respectives des réactifs (i) et (2i) étant choisies de façon que le rapport r :

$$\frac{\text{nombre de moles de diisocyanate (i)}}{\text{nombre de moles d'anhydride (2i)}}$$

se situe dans l'intervalle allant de 1,05/1 à 2/1 ;

– la proportion du réactif (3i) étant choisie de façon que le rapport r′ :

$$\frac{\text{nombre de moles d'acide alkényloxycarboxylique(3i)}}{\text{nombre de moles de diisocyanate (i)} - \text{nombre de moles d'anhydride (2i)}}$$

soit égal à 2.

A titre d'exemples spécifiques de diisocyanate (i) de formule (III) qui conviennent bien, on peut citer en particulier :

– le diisocyanato-4,4′-diphényl-2,2-propane,
– le diisocyanato-4,4′-diphénylméthane,
– le diisocyanato-4,4′-biphényle,
– le diisocyanato-4,4′-diphénylsulfure,
– le diisocyanato-4,4′-diphénylsulfone,
– le diisocyanato-4,4′-diphényléther,
– le diisocyanato-4,4′-diphényl-1,1-cyclohexane.

On utilie de préférence, pour la mise en oeuvre de la présente invention, le diisocyanato-4,4′-diphénylméthane et le diisocyanato-4,4′-diphényléther.

A titre d'exemples spécifiques de monoanhydrides d'acides tricarboxyliques (2i) de formule (IV) qui conviennent bien, on peut citer en particulier :

– le monoanhydride d'acide trimellique,
– le monoanhydride-2,3 d'acide naphtalène-tricarboxylique-2,3,6,
– le monoanhydride-1,8 d'acide naphtalène-tricarboxylique-1,8,4,
– le monoanhydride-1,2 d'acide naphtalène-tricarboxylique-1,2,5,
– le monoanhydride-3,4 d'acide diphényl-tricarboxylique-3,4,4′,
– le monoanhydride-3,4 d'acide diphényl-sulfone-tricarboxylique-3,4,3′,
– le monoanhydride-3,4 d'acide diphényl-éther-tricarboxylique-3,4,4′,
– le monoanhydride-3,4 d'acide benzophénone-tricarboxylique-3,4,4′,
– le monoanhydride-3,4 d'acide diphényl-isopropylidène-tricarboxylique-3,4,3′.

A titre d'exemples spécifiques de monoacides carboxyliques à substituant alkényloxy (3i) de formule (V) qui conviennent bien, on peut citer en particulier :

– l'acide allyloxy-2 benzoïque,
– l'acide allyloxy-3 benzoïque,
– l'acide allyloxy-4 benzoïque,
– l'acide méthallyloxy-2 benzoïque,
– l'acide méthallyloxy-3 benzoïque,
– l'acide méthallyloxy-4 benzoïque.

On utilise de préférence, pour la mise en oeuvre de la présente invention, l'acide allyloxy-4 benzoïque.

Les monoacides carboxyliques à substituant alkényloxy (3i) sont des composés qui sont connus dans l'art antérieur. Ils peuvent être notamment préparés à partir des acides hydroxybenzoïques (ortho-, méta ou para). On peut par exemple faire réagir l'acide hydroxybenzoïque, dont on a préalablement transformé la fonction acide en une fonction ester dérivant d'un alcanol inférieur, avec selon le cas un halogènure d'allyle ou de méthallyle (le plus souvent le bromure) en opérant en solution dans l'acétone et en présence de carbonate de potassium. La fonction acide est ensuite régénérée par saponification.

La réaction permettant de préparer les polyamide-imides selon la présente invention est conduite en milieu homogène par addition aux réactifs (i), (2i) et (3i) d'un solvant ou mélange de solvants communs aux réactifs et au produit formé. Les solvants qui conviennent bien sont les solvants polaires, en particulier le N,N-diméthyl-acétamide, le N,N-diméthylformamide, la N-méthyl-pyrrolidone-2, le diméthyl sulfoxyde, la tétraméthyl-1,1,3,3 urée, la diméthyl-1,3 urée et un mélange de ces solvants ; ils doivent de plus être parfaitement anhydres.

De manière préférentielle, les proportions des réactifs (i) et (2i) sont choisies de façon que le rapport r :

$$\frac{\text{nombre de moles de diisocyanate (i)}}{\text{nombre de moles d'anhydride 2i)}}$$

se situe dans l'intervalle allant de 1,1/1 à 1,5/1.

Pratiquement, on dissout les réactifs de départ, qui sont engagés ensemble, dans le (ou les) solvant(s) en opérant de préférence à chaud entre 50°C et 80°C, puis on élève la température de la solution obtenue à la température désirée qui est au plus égale à 200°C, soit directement, soit de manière progressive, en opérant généralement sous la pression atmosphérique pendant une durée qui va varier dans une large mesure en fonction des conditions précises de température adoptées. De manière très préférentielle, le processus opératoire consiste à élever la température en cours de réaction, de 50°C à 80°C au début de la réaction jusqu'à 160-200°C, en suivant un programme avec une montée en température de l'ordre de 20°C à 30°C au bout de chaque unité de temps, l'unité de temps variant de 20 minutes à 1 heure 30 minutes. Une fois la température maximale désirée (entre 160°C et 200°C) atteinte, on pratique encore un palier de chauffage à cette température pendant une durée allant de 30 minutes à 3 heures.

La réaction permettant de préparer les polyamide-imides selon la présente invention peut être conduite au besoin en présence d'un catalyseur approprié. Les catalyseurs utilisables le cas échéant sont des composés organiques ne comportant pas de groupements fonctionnels à hydrogène mobile susceptible de réagir avec les groupes isocyanates. Conviennent bien dans cette optique notamment les amines tertiaires appartenant à la famille des composés mono- ou polycycliques ayant au moins un atome d'azote tertiaire intra- et/ou extra-cyclique ; à titre d'exemples spécifiques de catalyseurs utilisables, on peut citer en particulier : le diazo-1,4-bicyclo [2,2,2] octane, les N,N'-dialkylpipérazines, la N-alkylmorpholine, la N-alkylpipéridine dans lesquelles le radical alkyle est un radical méthyle et/ou éthyle. On peut également envisager d'utiliser comme catalyseurs des sels de métaux ; à titre d'exemples spécifique de pareils catalyseurs, on peut citer en particulier : le dilaurate de dibutylétain, l'acétylacétonate de cobalt.

La quantité de catalyseur, quand on choisit d'en utiliser un, représente généralement de 0,1 à 2 % du poids total des réactifs (i), (2i), et (3i) mis en solution.

En fin de réaction, le polyamide-imide est obtenu sous forme de solution. On peut le faire précipiter par addition dans le milieu réactionnel d'un non-solvant ou d'un mélange de non-solvants et séparer le polymère précipité du milieu réactionnel. Les non-solvants convenables sont par exemple l'eau, l'acétone, le tétrahydrofuranne, le toluène ou tout autre solvant ne solubilisant pas le polymère souhaité. Il est aussi possible d'obtenir le polymère par évaporation du (ou des) solvant(s) du milieu réactionnel dans une étuve ventilée.

Ces polyamide-imide fonctionnalisés, sous forme de solution, se prêtent bien à la fabrication notamment de fibres, de films de revêtement, des vernis isolants et cela soit lors de l'évaporation du solvant, soit ultérieurement. Sous forme précipitée, ces polymères peuvent servir pour la fabrication notamment de produits conformés en utilisant les techniques du moulage par injection ou par compression.

Un avantage de ces polyamide-imides réside sans le fait que, grâce à leurs groupements terminaux alkényloxy réactifs, ils peuvent être transformés, à un moment quelconque de leur mise en forme (de préférence après mise en forme), en polymères réticulés doués d'excellentes propriétés mécaniques et électriques ainsi que d'une grande inertie chimique à des températures de 200°C à 300°C. Cette réticulation est opérée par simple chauffage à une température comprise entre 150°C et 300°C pendant un temps déterminé en présence éventuellement d'un initiateur de polymérisation radicalaire ou d'un catalyseur de polymérisation anionique.

Les polyamide-imides selon la présente invention peuvent encore être engagés dans des réactions de copolymérisation avec un ou plusieurs autre(s) composé(s) ayant des groupes capables de réagir avec les doubles liaisons réactives des groupements terminaux alkényloxy.

les exemples qui suivent sont donnés à tire illustratif, mais non limitatif.

EXEMPLE 1 :

1. Exemple de mise en oeuvre de la présente invention :

Dans un réacteur en verre de 400 $cm^3$, muni d'une agitation centrale de type ancre, dans lequel on établit une légère surpression d'azote sec et qui est préchauffé à 80°C à l'aide d'un bain d'huile approprié, on introduit successivement :

– 19,84 g (0,0793 mole) de diisocyanato-4,4' diphénylméthane,
– 10,16 g (0,0529 mole) de monoanhydride d'acide trimellique,
– 70 g de N-méthyl-pyrrolidone-2, et

– 9,4 g (0,0528 mole) d'acide allyloxy-4 benzoïque.

On laisse réagir pendant 4 heures 30 minutes, sous agitation, en suivant le protocole de montée en températures ci-dessous indiqué :

– 1 heure à 80°C,
– 1 heure à 100°C,
– 30 minutes à 130°C, et
– 2 heures à 160°C.

Le collodium ou solution de polyamide-imide ainsi obtenu est une masse liquide de couleur brune ayant un poids de 102,5 g (il renferme 32,5 g de polymère). Par analyse infra-rouge on ne détecte pas de fonctions NCO et anhydride dans le collodion obtenu.

Le polyamide-imide est précipité par addition d'eau dans le collodion. Plus précisément, on introduit progressivement, sous vive agitation, 100 g de ce collodion dans 500 $cm^3$ d'eau. Le précipité obtenu est filtré, lavé avec de l'eau, puis de l'acétone ; il est séché ensuite à 100°C pendant 12 heures sous une pression réduite de $26{,}6.10^2$ Pa. Le produit granuleux qui est ainsi obtenu est ensuite broyé finement et tamisé pour retenir des particules inférieures à 125 μm.

Le polyamide-imide qui a été préparé dans cet exemple sous forme de poudre répond essentiellement à la formule suivante :

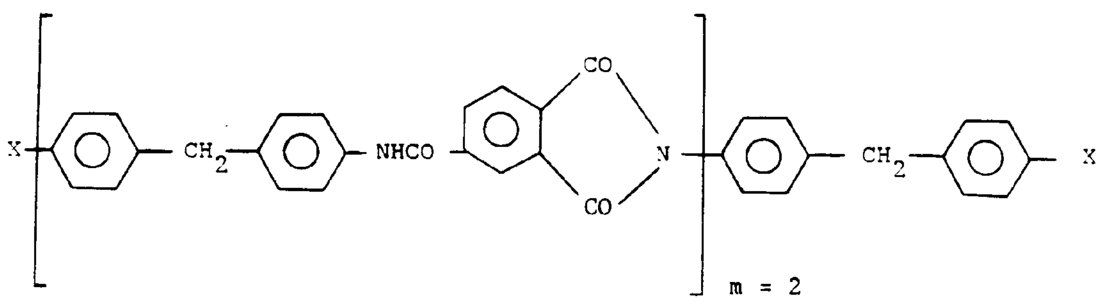

avec X =

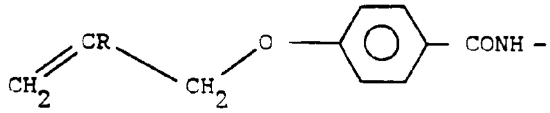

La poudre obtenue est soumise à différents tests :

. Détermination de la température de transition vitreuse (Tg) : elle est déterminée par analyse thermique différentielle (ATD) avec une vitesse de montée en température de 10°C/min. Le polyamide-imide préparé présente une Tg de 176°C.

. Dosage de perte de matière(s) volatile(s) : la poudre est placée pendant 2 heures dans une étuve ventilée et chauffée à différentes températures :

– à 150°C : perte de 0,9 % (variation en % par rapport au poids initial)
– à 200°C : perte de 1,6 %.

. Epreuve thermique : la poudre est soluble dans la N-méthyl-pyrrolidone-2; après une épreuve thermique de 1 heure à 250°C, la poudre devient totalement insoluble.

2. Description du procédé de préparation de l'acide allyloxy-4 benzoïque utilisé :

On utilise un appareillage constitué par un réacteur en verre muni d'une agitation centrale, d'un réfrigérant ascendant dans lequel on introduit successivement à 25°C :

– 50 g (0,301 mole) d'hydroxy-4 benzoate d'éthyl,
– 183,7 g de carbonate de potassium, et
– 300 $cm^3$ d'acétone.

On élève la température du milieu réactionnel jusqu'au reflux de l'acétone, c'est-à-dire jusqu'à 60°C. On introduit alors, en 3 fractions égales, un total de 43,7 g (0,361 mole) de bromure d'allyle avec un espacement de 2 heures entre chaque coulée.

On laisse ensuite réagir pendant 8 heures sous agitation. Au bout de ce temps, on refroidit jusqu'à 40°C et on introduit 310 $cm^3$ d'eau déminéralisée, puis 150 $cm^3$ d'éther diéthylique afin d'extraire le produit formé. Après décantation, puis évaporation de l'éther diéthylique, on obtient 48,3 g d'un liquide jaune clair dont la structure analysée par RMN du proton correspond à celle de l'allyloxy-4 benzoate d'éthyle.

On prélève alors 25 g (0,121 mole) de ce produit sur lequel on réalise une réaction de saponification. Dans un réacteur agité muni d'un réfrigérant ascendant, on introduit successivement à 35°C :

- 25 g (0,121 mole) d'allyloxy-4 benzoate d'éthyle, et
- 70 g d'une solution méthanolique contenant 10 g (0,179 mole) d'hydroxyde de potassium.

On laisse ensuite réagir 16 heures sous agitation. Après ce temps, on solubilise le précipité formé avec 200 $cm^3$ d'eau déminéralisée. L'acidification jusqu'à pH = 2 du milieu réactionnel est réalisée avec 20 $cm^3$ d'une solution aqueuse d'acide sulfurique à 30 % en poids. le précipité obtenu est filtré, puis séché pendant 16 heures en étuve sous $26{,}6.10^2$ Pa et à 60°C. On obtient alors 19,5 g d'un produit blanc, ayant un point de fusion de 158°C, dont la structure analysée par RMN du proton correspond à celle de l'acide allyloxy-4 benzoïque.

<u>EXEMPLE 2</u> :

On opère comme indiqué ci-avant à l'exemple 1, mais à partir des réactifs suivants :

- 17,66 g (0,0706 mole) de diisocyanato-4,4′ diphénylméthane,
- 12,33 g (0,0642 mole) d'anhydride trimellique,
- 70 g de N-méthyl-pyrrolidone-2, et
- 2,28 g (0,0128 mole) d'acide allyloxy-4 benzoïque.

On laisse réagir 6 heures, sous bonne agitation, en suivant le cycle de montée en températures ci-dessous indiqué :

- 1 heure à 80°C,
- 1 heure à 100°C,
- 1 heure à 130°C,
- 1 heure 15 minutes à 160°C, et
- 1 heure 45 minutes à 180°C.

Le collodion ainsi obtenu est une masse liquide de couleur brune ayant un poids de 96 g (il renferme 26 g de polymère). Par analyse infra-rouge on ne détecte pas de fonctions anhydride et NCO dans le collodion.

La précipitation du collodion dans l'eau ainsi que le lavage et le séchage du précipité formé sont identiques aux opérations décrites à l'exemple 1. On obtient une poudre beige qui est ensuite broyée finement et tamisée (particules inférieures à 200 µm).

Le polyamide-imide qui a été préparé dans cet exemple sous forme de poudre répond essentiellement à la formule présentée dans l'exemple 1, dans laquelle le symbole m est égal à 9.

La poudre obtenue est soumise aux différents tests suivants :

. Dosage de perte de matière(s) volatile(s) selon la méthode décrite à l'exemple 1 :

  - à 200°C : perte de 2,57 %,
  - à 250°C : perte de 2,5 %.

. Moulage : la poudre obtenue est chauffée à 200°C pendant 1 heure, puis on en introduit 7,5 g dans un moule cylindrique (diamètre : 5 cm) et on installe l'ensemble entre les deux plateaux circulaires d'une presse (ces plateaux sont adaptés à la taille du moule et préchauffés à 300°C) sur lesquels on applique une pression de 1 MPa jusqu'à 250°C (température matière), puis 10 MPa jusqu'à 300°C. Lorsque l'équilibre thermique de 300°C est atteint, on maintient l'ensemble dans ces conditions pendant 1 heure. On laisse refroidir le moule et son contenu situé entre les deux plateaux de la presse pendant 12 heures sous 1 MPa de pression. Après démoulage, on obtient un objet cylindrique (diamètre : 5 cm ; hauteur : 3 mm) présentant les caractéristiques mécaniques en flexion suivantes (mesurées selon les indications de la norme ASTM D 790 M ; portée = 35 mm) :

  - résistance en flexion : 79,68 MPa,
  - module en flexion : 1980 Mpa.

**Revendications**

**Revendications pour les Etats contractants suivants: AT, BE, CH, DE, FR, GB, IT, LI, LU, NL, SE**

1. Polyamide-imides aromatiques linéaires dont les chaînes comportent des groupements alkényloxy terminaux, caractérisés en ce qu'ils répondent à la formule suivante :

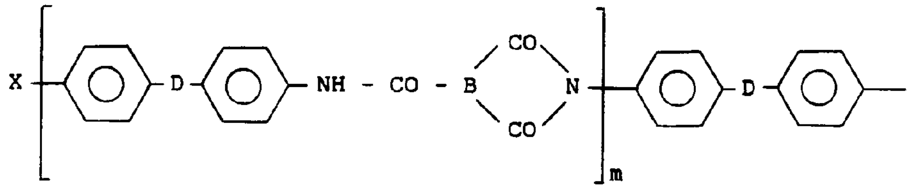

(I)

dans laquelle :

– les symboles D, identiques, représentent chacun un lien valentiel simple ou un groupement :

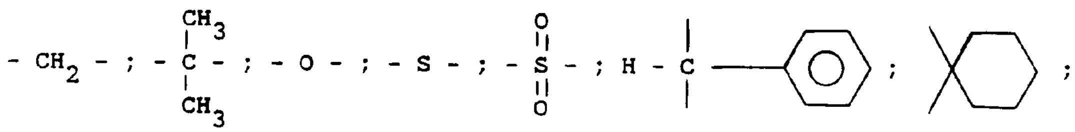

– le symbole B représente un radical trivalent consistant dans un radical aromatique possédant au moins 6 atomes de carbone, substitué ou non, ou dans deux de ces radicaux reliés entre eux par un lien valentiel simple ou un groupement :

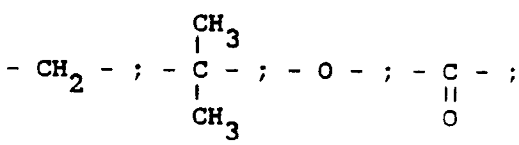

– le symbole m représente le nombre moyen des unités de récurrence et il est au moins égal à 1 ;

– les symboles X, identiques, représentent chacun un radial de formule :

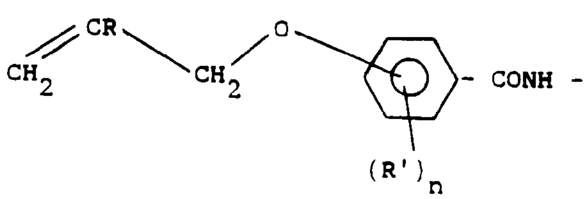

(II)

dans laquelle :

* R représente un atome d'hydrogène ou un radical méthyle ;

* le radical (méth)allyloxy est en position ortho, méta ou para par rapport à l'atome de carbone du cycle benzénique relié au groupe CONH ;

* R′ représente un radical méthyle ;

* n est un nombre entier égal à 0,1, 2 ou 3.

2. Procédé de préparation des polyamide-imides selon la revendication 1, caractérisé en ce qu'il consiste à effectuer le chauffage, en opérant à une température allant de 50°C à 200°C et en présence d'un solvant organique ou mélange de solvants organiques, des réactifs (i), (2i)et (3i) suivants, lesdits réactifs étant mis à réagir simultanément :

– (i) est un diisocyanate de formule :

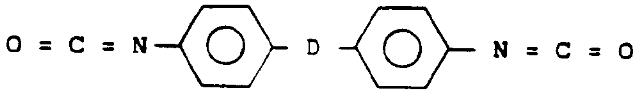 (III)

dans laquelle D a la signification donnée ci-avant dans la formule (I) ;

– (2i) est un monoanhydride d'acide tricarboxylique de formule :

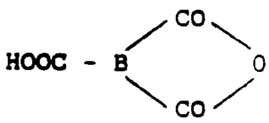 (IV)

dans laquelle B a la signification donnée ci-avant dans la formule (I) ; et

– (3i) est un monoacide carboxylique substitué par un groupe alkényloxy sur le reste attaché au groupe carboxy, de formule :

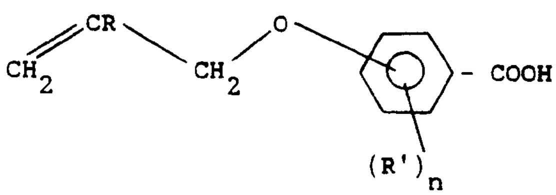 (V)

dans laquelle les symboles R, R′ et n ont les significations données ci-avant dans la formule (II) ;

– les proportions respectives des réactifs (i) et (2i) étant choisies de façon que le rapport r :

$$\frac{\text{nombre de moles de diisocyanate (i)}}{\text{nombre de moles d'anhydride (2i)}}$$

se situe dans l'intervalle allant de 1,05/1 à 2/1 ;

– la proportion du réactif (3i) étant choisie de façon que le rapport r′ :

$$\frac{\text{nombre de moles d'acide alkényloxycarboxylique (3i)}}{\text{nombre de moles de diisocyanate (i)} - \text{nombre de moles d'anhydride (2i)}}$$

soit égal à 2.

3. Procédé de préparation selon la revendication 2, caractérisé en ce que le diisocyanate (i) de formule (III) est choisi dans le groupe formé par :

– le diisocyanato-4,4′-diphényl-2,2-propane,
– le diisocyanato-4,4′-diphénylméthane,
– le diisocyanato-4,4′-biphényle,
– le diisocyanato-4,4′-diphénylsulfure,
– le diisocyanato-4,4′-diphénylsulfone,
– le diisocyanato-4,4′-diphényléther,
– le diisocyanato-4,4′-diphényl-1,1-cyclohexane.

4. Procédé de préparation selon l'une quelconque des revendications 2 et 3, caractérisé en ce que le monanhydride d'acide tricarboxyliques (2i) de formule (IV) est choisi dans le groupe formé par :

– le monoanhydride d'acide trimellique,
– le monoanhydride-2,3 d'acide naphtalène-tricarboxylique-2,3,6,
– le monoanhydride-1,8 d'acide naphtalène-tricarboxylique-1,8,4,
– le monoanhydride-1,2 d'acide naphtalène-tricarboxylique-1,2,5,
– le monoanhydride-3,4 d'acide diphényl-tricarboxylique-3,4,4′,
– le monoanhydride-3,4 d'acide diphényl-sulfone-tricarboxylique-3,4,3′,
– le monoanhydride-3,4 d'acide diphényl-éther-tricarboxylique-3,4,4′,
– le monoanhydride-3,4 d'acide benzophénone-tricarboxylique-3,4,4′,

– le monoanhydride-3,4 d'acide diphényl-isopropylidène-tricarboxylique-3,4,3'.

5. Procédé de préparation selon l'une quelconque des revendications 2 à 4, caractérisé en ce que le monoacide carboxylique à substituant alkényloxy (3i) de formule (V) est choisi dans le groupe formé par :

– l'acide allyloxy-2 benzoïque,
– l'acide allyloxy-3 benzoïque,
– l'acide allyloxy-4 benzoïque,
– l'acide méthallyloxy-2 benzoïque,
– l'acide méthallyloxy-3 benzoïque,
– l'acide méthallyloxy-4 benzoïque.

6. Procédé de préparation selon l'une quelconque des revendications 2 à 5, caractérisé en ce que l'on dissout les réactifs de départ (i), (2i) et (3i), qui sont engagés ensemble, dans un solvant organique ou dans un mélange de solvants organiques en opérant à chaud entre 50°C et 80°C, puis on élève la température de la solution obtenue à la température désirée qui est au plus égale à 200°C, soit directement, soit de manière progressive, en opérant généralement sous la pression atmosphérique pendant une durée qui va varier dans une large mesure en fonction des conditions précises de température adoptées.

7. Procédé de préparation selon l'une quelconque des revendications 2 à 6, caractérisé en ce que les solvants mis en oeuvre sont pris dans le groupe formé par : le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants.

8. Utilisation des polyamide-imides fonctionnalisés selon la revendication 1 pour la préparation de polymères réticulés par chauffage à une température comprise entre 150°C et 300°C en présence éventuellement d'un initiateur de polymérisation radicalaire ou d'un catalyseur de polymérisation anionique.

**Revendications pour l'Etat contractant suivant : ES**

1. Procédé de préparation de polyamide-imides aromatiques linéaires, dont les chaînes comportent des groupements alkényloxy terminaux, qui répondent à la formule suivante :

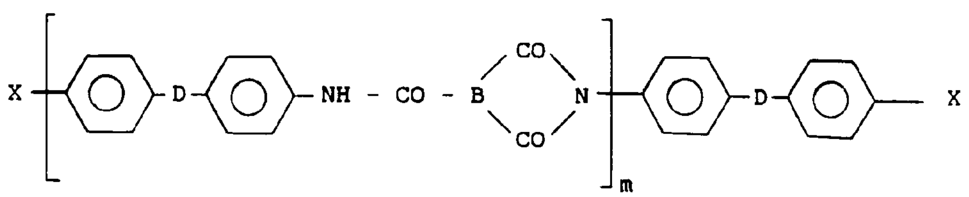
(I)

dans laquelle :

– les symboles D, identiques, représentent chacun un lien valentiel simple ou un groupement :

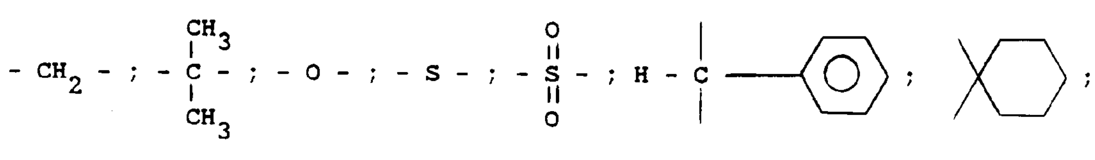

– le symbole B représente un radical trivalent consistant dans un radical aromatique possédant au moins 6 atomes de carbone, substitué ou non, ou dans deux de cas radicaux reliés entre eux par un lien valentiel simple ou un groupement :

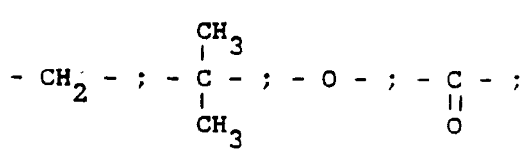

– le symbole m représente le nombre moyen des unités de récurrence et il est au moins égal à 1 ;
– les symboles X, identiques, représentent chacun un radial de formule :

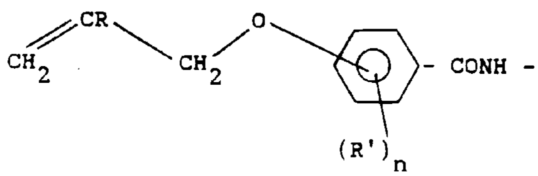

(II)

dans laquelle :

* R représente un atome d'hydrogène ou un radical méthyle ;

* le radical (méth)allyloxy est en position ortho, méta ou para par rapport à l'atome de carbone du cycle benzénique relié au groupe CONH ;

* R′ représente un radical méthyle ;

* n est un nombre entier égal à 0,1, 2 ou 3 ledit procédé étant caractérisé en ce qu'il consiste à effectuer le chauffage, en opérant à une température allant de 50°C à 200°C et en présence d'un solvant organique ou mélange de solvants organiques, des réactifs (i), (2i) et (3i) suivants, lesdits réactifs étant mis à réagir simultanément :

– (i) est un diisocyanate de formule :

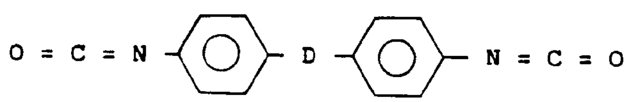

(III)

dans laquelle D a la signification donnée ci-avant dans la formule (I) ;
– (2i) est un monoanhydride d'acide tricarboxylique de formule :

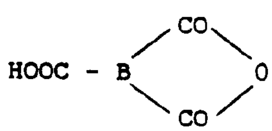

(IV)

dans laquelle B a la signification donnée ci-avant dans la formule (I) ; et
– (3i) est un monoacide carboxylique substitué par un groupe alkényloxy sur le reste attaché au groupe carboxy, de formule :

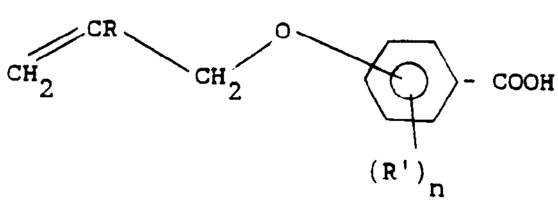

(V)

dans laquelle les symboles R, R′ et n ont les significations données ci-avant dans la formule (II) ;
– les proportions respectives des réactifs (i) et (2i) étant choisies de façon que le rapport r :

$$\frac{\text{nombre de moles de diisocyanate (i)}}{\text{nombre de moles d'anhydride (2i)}}$$

se situe dans l'intervalle allant de 1,05/1 à 2/1 ;
– la proportion du réactif (3i) étant choisie de façon que le rapport r′ :

$$\frac{\text{nombre de moles d'acide alkényloxycarboxylique(3i)}}{\text{nombre de moles de diisocyanate (i)} - \text{nombre de moles d'anhydride (2i)}}$$

soit égal à 2.

2. Procédé de préparation selon la revendication 1, caractérisé en ce que le diisocyanate (i) de formule (III) est choisi dans le groupe formé par :

- le diisocyanato-4,4'-diphényl-2,2-propane,
- le diisocyanato-4,4'-diphénylméthane,
- le diisocyanato-4,4'-biphényle,
- le diisocyanato-4,4'-diphénylsulfure,
- le diisocyanato-4,4'-diphénylsulfone,
- le diisocyanato-4,4'-diphényléther,
- le diisocyanato-4,4'-diphényl-1,1-cyclohexane.

3. Procédé de préparation selon l'une quelconque des revendications 1 et 2, caractérisé en ce que le monanhydride d'acide tricarboxylique (2i) de formule (IV) est choisi dans le groupe formé par :

- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4',
- le monoanhydride-3,4 d'acide diphényl-sulfone-tricarboxylique-3,4,3',
- le monoanhydride-3,4 d'acide diphényl-éther-tricarboxylique-3,4,4',
- le monoanhydride-3,4 d'acide benzophénone-tricarboxylique-3,4,4',
- le monoanhydride-3,4 d'acide diphényl-isopropylidène-tricarboxylique-3,4,3'.

4. Procédé de préparation selon l'une quelconque des revendications 1 à 3, caractérisé en ce que le monoacide carboxylique à substituant alkényloxy (3i) de formule (V) est choisi dans le groupe formé par :

- l'acide allyloxy-2 benzoïque,
- l'acide allyloxy-3 benzoïque,
- l'acide allyloxy-4 benzoïque,
- l'acide méthallyloxy-2 benzoïque,
- l'acide méthallyloxy-3 benzoïque,
- l'acide méthallyloxy-4 benzoïque.

5. Procédé de préparation selon l'une quelconque des revendications 1 à 4, caractérisé en ce que l'on dissout les réactifs de départ (i), (2i) et (3i), qui sont engagés ensemble, dans un solvant organique ou dans un mélange de solvants organiques en opérant à chaud entre 50°C et 80°C, puis on élève la température de la solution obtenue à la température désirée qui est au plus égale à 200°C, soit directement, soit de manière progressive, en opérant généralement sous la pression atmosphérique pendant une durée qui va varier dans une large mesure en fonction des conditions précises de température adoptées.

6. Procédé de préparation selon l'une quelconque des revendications 1 à 5, caractérisé en ce que les solvants mis en oeuvre sont pris dans le groupe formé par : le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants.

## Claims

### Claims for the following Contracting State : ES

1. Process for the preparation of linear aromatic polyamideimides whose chains contain alkenyloxy end groups, which correspond to the following formula:

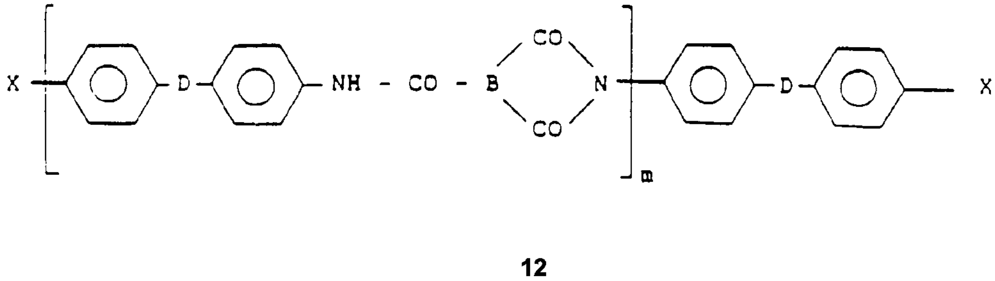
(I)

in which:

– each of the symbols D, which are identical, denotes a single valency bond or a group:

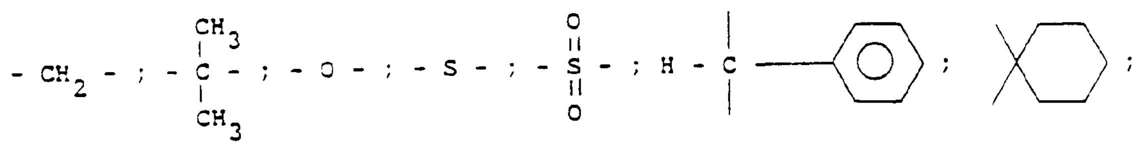

– the symbol B denotes a trivalent radical consisting of an aromatic radical containing at least 6 carbon atoms, substituted or otherwise, or of two of these radicals linked together by a single valency bond or a group:

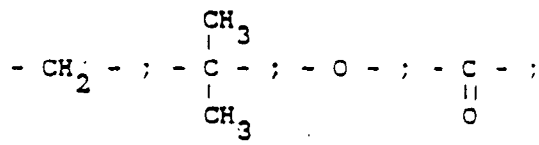

– the symbol m denotes the average number of the repeat units and it is at least equal to 1; and
– each of the symbols X, which are identical, denotes a radical of formula:

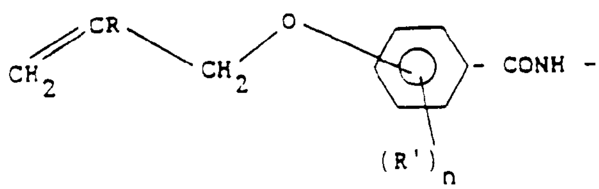

(II)

in which:

* R denotes a hydrogen atom or a methyl radical;
* the (meth)allyloxy radical is in an ortho, meta or para position relative to the carbon atom of the benzene ring which is linked to the CONH group;
* R′ denotes a methyl radical; and
* n is an integer equal to 0, 1, 2 or 3; the said process being characterised in that it consists in performing the heating of the following reactants (i), (ii) and (iii), the operation being carried out at a temperature ranging from 50°C to 200°C and in the presence of an organic solvent or a mixture of organic solvents, the said reactants being reacted simultaneously:

– (i) is a diisocyanate of formula:

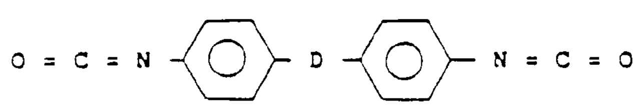

(III)

in which D has the meaning given above in formula (I);
– (ii) is a monoanhydride of a tricarboxylic acid of formula:

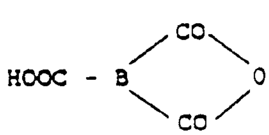

(IV)

in which B has the meaning given above in formula (I); and
– (iii) is a monocarboxylic acid substituted by an alkenyloxy group on the residue attached to the carboxyl group, of formula:

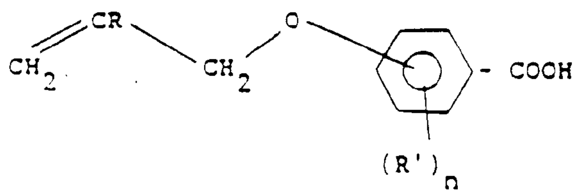

(V)

in which the symbols R, R′ and n have the meanings given above in formula (II);

– the respective proportions of the reactants (i) and (ii) being chosen so that the ratio r:

$$\frac{\text{number of moles of diisocyanate (i)}}{\text{number of moles of anhydride (ii)}}$$

lies in the range from 1.05/1 to 2/1; and

– the proportion of the reactant (iii) being chosen so that the ratio r′:

$$\frac{\text{number of moles of alkenyloxycarboxylicacid (iii)}}{\text{number of moles of diisocyanate (i)} - \text{number of moles of anhydride (ii)}}$$

is equal to 2.

2. Process of preparation according to Claim 1, characterised in that the diisocyanate (i) of formula (III) is chosen from the group consisting of:

– 4,4′-diisocyanato-2,2-diphenylpropane,
– 4,4′-diisocyanatodiphenylmethane,
– 4,4′-diisocyanatobiphenyl,
– 4,4′-diisocyanatodiphenyl sulphide,
– 4,4′-diisocyanatodiphenyl sulphone,
– 4,4′-diisocyanatodiphenyl ether, and
– 4,4′-diisocyanato-1,1-diphenylcyclohexane.

3. Process of preparation according to either of Claims 1 and 2, characterised in that the monoanhydride of a tricarboxylic acid (ii) of formula (IV) is chosen from the group consisting of:

– the monoanhydride of trimellitic acid,
– the 2,3-monoanhydride of 2,3,6-naphthalenetricarboxylic acid,
– the 1,8-monoanhydride of 1,8,4-naphthalenetricarboxylic acid,
– the 1,2-monoanhydride of 1,2,5-naphthalenetricarboxylic acid,
– the 3,4-monoanhydride of 3,4,4′-diphenyltricarboxylic acid,
– the 3,4-monoanhydride of diphenyl sulphone 3,4,3′-tricarboxylic acid,
– the 3,4-monoanhydride of diphenyl ether 3,4,4′-tricarboxylic acid,
– the 3,4-monoanhydride of 3,4,4′-benzophenonetricarboxylic acid, and
– the 3,4-monoanhydride of 3,4,3′-diphenylisopropylidenetricarboxylic acid.

4. Process of preparation according to any one of Claims 1 to 3, characterised in that the monocarboxylic acid containing an alkenyloxy substituent (iii) of formula (V) is chosen from the group consisting of:

– 2-allyloxybenzoic acid,
– 3-allyloxybenzoic acid,
– 4-allyloxybenzoic acid,
– 2-methallyloxybenzoic acid,
– 3-methallyloxybenzoic acid, and
– 4-methallyloxybenzoic acid.

5. Process of preparation according to any one of Claims 1 to 4, characterised in that the starting reactants (i), (ii) and (iii), which are used together, are dissolved in an organic solvent or in a mixture of organic solvents, the operation being carried out with heating to between 50°C and 80°C, and the temperature of the solution obtained is then raised to the desired temperature which does not exceed 200°C, either directly or progressively, the operation being generally carried out at atmospheric pressure for a period which will vary to a large extent as a function of the precise temperature conditions adopted.

6. Process of preparation according to any one of Claims 1 to 5, characterised in that the solvents used are taken from the group consisting of: N,N-dimethylacetamide, N,N-dimethylformamide, N-methyl-2-pyrrolidone, dimethyl sulphoxide, 1,1,3,3-tetramethylurea, 1,3-dimethylurea and a mixture of these solvents.

**Claims for the following Contracting States : AT, BE, CH, DE, FR, GB, IT, LI, LU, NL, SE**

1. Linear aromatic polyamideimides whose chains contain alkenyloxy end groups, characterised in that they correspond to the following formula:

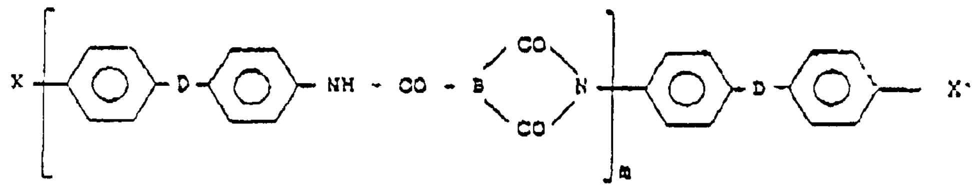

(I)

in which:

– each of the symbols D, which are identical, denotes a single valency bond or a group:

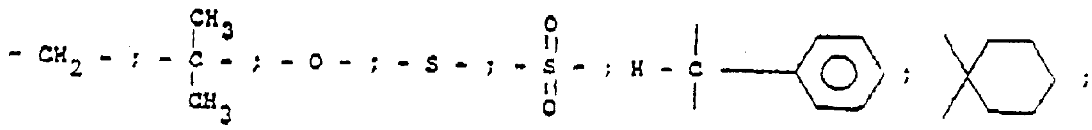

– the symbol B denotes a trivalent radical consisting of an aromatic radical containing at least 6 carbon atoms, substituted or otherwise, or of two of these radicals linked together by a single valency bond or a group:

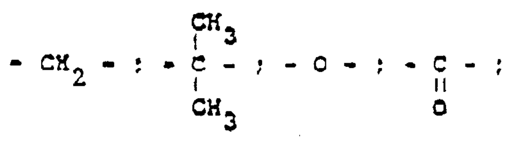

– the symbol B denotes the average number of the repeat units and it is at least equal to 1; and

– each of the symbols X, which are identical, denotes a radical of formula:

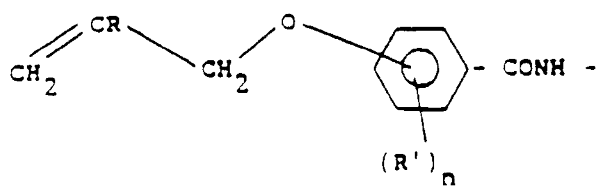

(II)

in which:

* R denotes a hydrogen atom or a methyl radical;
* the (meth)allyloxy radical is in an ortho, meta or para position relative to the carbon atom of the benzene ring which is linked to the CONH group;
* R′ denotes a methyl radical; and
* n is an integer equal to 0, 1, 2 or 3.

2. Process for the preparation of the polyamideimides according to Claim 1, characterised in that it consists in performing the heating of the following reactants (i), (ii) and (iii), the operation being carried out at a temperature ranging from 50°C to 200°C and in the presence of an organic solvent or a mixture of organic solvents, the said reactants being reacted simultaneously:

– (i) is a diisocyanate of formula:

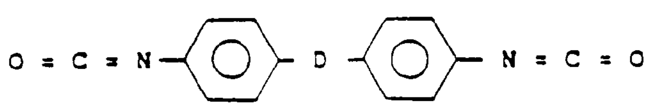

(III)

in which D has the meaning given above in formula (I);

– (ii) is a monoanhydride of a tricarboxylic acid of formula:

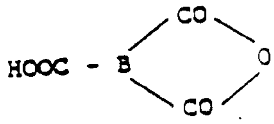

(IV)

in which B has the meaning given above in formula (I); and

– (iii) is a monocarboxylic acid substituted by an alkenyloxy group on the residue attached to the carboxyl group, of formula:

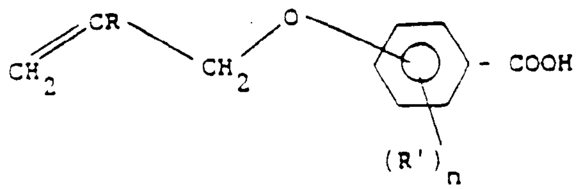

(V)

in which the symbols R, R′ and n have the meanings given above in formula (II);

– the respective proportions of the reactants (i) and (ii) being chosen so that the ratio r:

$$\frac{\text{number of moles of diisocyanate (i)}}{\text{number of moles of anhydride (ii)}}$$

lies in the range from 1.05/1 to 2/1; and

– the proportion of the reactant (iii) being chosen so that the ratio r′:

$$\frac{\text{number of moles of alkenyloxycarboxylicacid (iii)}}{\text{number of moles of diisocyanate (i)} - \text{number of moles of anhydride (ii)}}$$

is equal to 2.

3. Process of preparation according to Claim 2, characterised in that the diisocyanate (i) of formula (III) is chosen from the group consisting of:

– 4,4′-diisocyanato-2,2-diphenylpropane,
– 4,4′-diisocyanatodiphenylmethane,
– 4,4′-diisocyanatobiphenyl,
– 4,4′-diisocyanatodiphenyl sulphide,
– 4,4′-diisocyanatodiphenyl sulphone,
– 4,4′-diisocyanatodiphenyl ether, and
– 4,4′-diisocyanato-1,1-diphenylcyclohexane.

4. Process of preparation according to either of Claims 2 and 3, characterised in that the monoanhydride of a tricarboxylic acid (ii) of formula (IV) is chosen from the group consisting of:

– the monoanhydride of trimellitic acid,
– the 2,3-monoanhydride of 2,3,6-naphthalenetricarboxylic acid,
– the 1,8-monoanhydride of 1,8,4-naphthalenetricarboxylic acid,
– the 1,2-monoanhydride of 1,2,5-naphthalenetricarboxylic acid,
– the 3,4-monoanhydride of 3,4,4′-diphenyltricarboxylic acid,
– the 3,4-monoanhydride of diphenyl sulphone 3,4,3′-tricarboxylic acid,
– the 3,4-monoanhydride of diphenyl ether 3,4,4′-tricarboxylic acid,
– the 3,4-monoanhydride of 3,4,4′-benzophenonetricarboxylic acid, and
– the 3,4-monoanhydride of 3,4,3′-diphenylisopropylidenetricarboxylic acid.

5. Process of preparation according to any one of Claims 2 to 4, characterised in that the monocarboxylic acid containing an alkenyloxy substituent (iii) of formula (V) is chosen from the group consisting of:

– 2-allyloxybenzoic acid,
– 3-allyloxybenzoic acid,
– 4-allyloxybenzoic acid,
– 2-methallyloxybenzoic acid,
– 3-methallyloxybenzoic acid, and
– 4-methallyloxybenzoic acid.

6. Process of preparation according to any one of Claims 2 to 5, characterised in that the starting reactants (i), (ii) and (iii), which are used together, are dissolved in an organic solvent or in a mixture of organic solvents, the operation being carried out with heating to between 50°C and 80°C, and the temperature of the solution obtained is then raised to the desired temperature which does not exceed 200°C, either directly or progressively, the operation being generally carried out at atmospheric pressure for a period which will vary to a large extent as a function of the precise temperature conditions adopted.

7. Process of preparation according to any one of Claims 2 to 6, characterised in that the solvents used are taken from the group consisting of: N,N-dimethylacetamide, N,N-dimethylformamide, N-methyl-2-pyrrolidone, dimethyl sulphoxide, 1,1,3,3-tetramethylurea, 1,3-dimethylurea and a mixture of these solvents.

8. Use of the polyamideimides containing functional groups according to Claim 1 for the preparation of crosslinked polymers by heating to a temperature of between 150°C and 300°C in the presence, if desired, of a radical polymerisation initiator or of an anionic polymerisation catalyst.

## Patentansprüche

### Patentansprüche für folgenden Vertragsstaat : ES

1. Verfahren zur Herstellung von linearen, aromatischen Polyamidimiden, deren Ketten endständige Alkenyloxygruppen aufweisen, der folgenden Formel

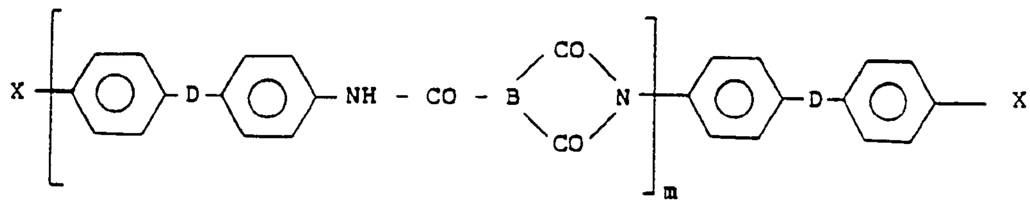 (I)

worin

– die Symbole D, die identisch sind, jeweils eine einfache Valenzbindung oder eine Gruppe

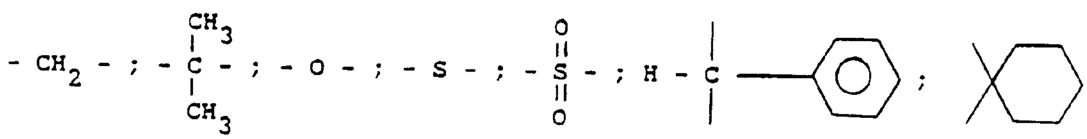

bedeuten;

– das Symbol B einen dreiwertigen Rest wiedergibt, der aus einem substituierten oder unsubstituierten, aromatischen Rest mit zumindest 6 Kohlenstoffatomen oder aus zweien dieser Reste besteht, die miteinander über eine einfache Valenzbindung oder eine Gruppe - $CH_2$-;

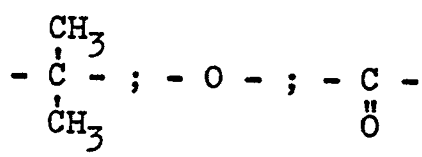

verbunden sind;

– das Symbol m die durchschnttliche Anzahl der wiederkehrenden Einheiten wiedergibt und zumindest 1 beträgt;

– die Symbole X, die identisch sind, jeweils einen Rest der Formel

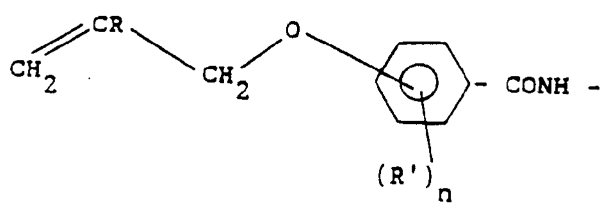 (II)

wiedergeben, worin

* R ein Wasserstoffatom oder einen Methylrest bedeutet; der (Meth)Allyloxyrest sich in ortho-, meta- oder para- Stellung in bezug auf das Kohlenstoffatom des Benzolrings, welches an die CONH-Gruppe gebunden ist, befindet;

* R′ für einen Methylrest steht;

* n eine ganze Zahl entsprechend 0, 1, 2 oder 3 ist; wobei das Verfahren dadurch gekennzeichnet ist, daß es darin besteht, das Erhitzen unter Arbeiten bei einer Temperatur von 50 bis 200°C und in Anwesenheit eines organischen Lösungsmittels oder eines Gemisches organischer Lösungsmittel der folgenden Reagentien (i), (2i) und (3i) vorzunehmen, wobei die Reagentien gleichzeitig der Reaktion unterzogen werden:

– (i) ist ein Diisocyanat der Formel

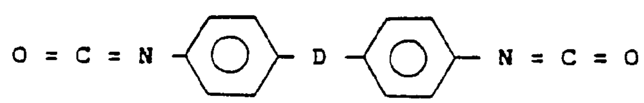

(III)

worin D die vorstehende, für Formel (I) angegebene Bedeutung besitzt;

– (2i) ist ein Tricarbonsäuremonoanhydrid der Formel

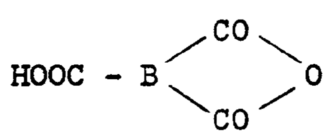

(IV)

worin B die vorstehend für die Formel (I) angegebene Bedeutung besitzt; und

– (3i) ist eine Monocarbonsäure, die durch eine Alkenyloxygruppe an dem an die Carboxygruppe geknüpften Rest substituiert ist, mit der Formel

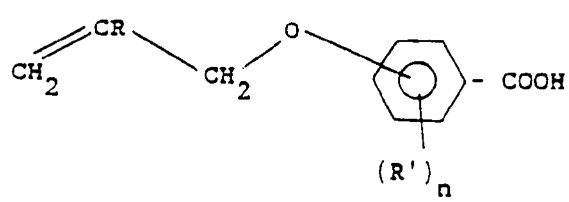

(V)

worin die Symbole R, R′ und n die vorstehend für Formel (II) angegebenen Bedeutungen besitzen;

– wobei die jeweiligen Anteile der Reagentien (i) und (2i) derart gewählt sind, daß das Verhältnis r

$$\frac{\text{Anzahl der Mole Diisocyanat (i)}}{\text{Anzahl der Mole Anhydrid (2i)}}$$

sich im Bereich von 1,05/1 bis 2/1 befindet;

– der Anteil des Reagens (3i) derart gewählt ist, daß das Verhältnis r′

$$\frac{\text{Anzahl der Mole Alkenyloxycarbonsäure (3i)}}{\text{Anzahl der Mole Diisocyanat (i)} - \text{Anzahl der Mole Anhydrid (2i)}}$$

dem Wert 2 entspricht.

2. Verfahren gemäß Anpruch 1, dadurch gekennzeichnet, daß das Diisocyanat (i) der Formel (III) ausgewählt wird unter

– 4,4′-Diisocyanato-2,2-diphenylpropan,

– 4,4′-Diisocyanato-diphenylmethan,

– 4,4′-Diisocyanato-biphenyl,

– 4,4′-Diisocganato-diphenylsulfid,

– 4,4′-Diisocyanato-diphenylsulfon,

– 4,4′-Diisocyanato-diphenylether,

– 4,4′-Diisocganato-1,1-diphenylcyclohexan.

3. Verfahren gemäß einem der Ansprüche 1 und 2, dadurch gekennzeichnet, daß das Tricarbonsäuremonoanhydrid (2i) der Formel (IV) ausgewählt wird unter dem

- Monoanhydrid der Trimellitsäure,
- 2,3-Monoanhydrid der 2,3,6-Naphtalintricarbonsäure,
- 1,8-Monoanhydrid der 1,8,4-Naphthalintricarbonsäure,
- 1,2-Monoanhydrid der 1,2,5-Naphthalintricarbonsäure,
- 3,4-Monoanhydrid der 3,4,4'-Diphenyltrlcarbonsäure,
- 3,4-Monoanhydrid der 3,4,3'-Diphenylsulfontricarbonsäure,
- 3,4-Monoanhydrid der 3,4,4'-Diphenylethertricarbonsäure,
- 3,4-Monoanhydrid der 3,4,4'-Benzophenontricarbonsäure,
- 3,4-Monoanhydrid der 3,4,3'-Diphenylisopropylidentricarbonsäure.

4. Verfahren gemäß einem der Ansprüche 1 bis 3, dadurch gekennzeichnet, daß die Monocarbonsäure mit Alkenyloxy-Substituenten (3i) der Formel (V) ausgewählt wird unter

- 2-Allyloxybenzoesäure,
- 3-Allyloxybenzoesäure,
- 4-Allyloxybenzoesäure,
- 2-Methallyloxybenzoesäure,
- 3-Methallyloxybenzoesäure,
- 4-Methallyloxybenzoesäure.

5. Verfahren gemäß einem der Ansprüche 1 bis 4, dadurch gekennzeichnet, daß man die Ausgangsreagentien (i), (2i) und (3i), die gemeinsam eingesetzt werden, in einem organischen Lösungsmittel oder in einem Gemisch aus organischen Lösungsmitteln löst, wobei man in der Wärme zwischen 50 und 80°C arbeitet, wonach man die Temperatur der erhaltenen Lösung auf die gewünschte Temperatur, die höchstens 200°C beträft, entweder direkt oder allmählich erhöht, wobei man im allgemeinen unter Atmosphärendruck während einer Dauer arbeitet, die innerhalb eines breiten Bereichs in Abhängigkeit der exakten, angewandten Temperaturbedingungen variieren kann.

6. Verfahren gemäß einem der Ansprüche 1 bis 5, dadurch gekennzeichnet, daß die eingesetzten Lösungsmittel der folgenden Gruppe entnommen werden: N,N-Dimethylacetamid, N,N-Dimethylformamid, N-Methyl-2-pyrrolidon, Dimethylsulfoxid, 1,1,3,3-Tetramethylharnstoff, 1,3-Dimethylharnstoff und eiem Gemisch dieser Lösungsmittel.

**Patentansprüche für folgende Vertragsstaaten : AT, BE, CH, DE, FR, GB, IT, LI, LU, NL, SE**

1. Lineare, aromatische Polyamidimide, deren Ketten endständige Alkenyloxygruppen aufweisen, dadurch gekennzeichnet, daß sie der folgenden Formel entsprechen:

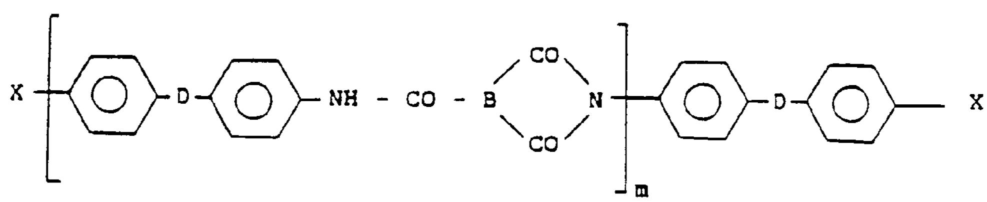 (I)

worin

- die Symbole D, die identisch sind, jeweils eine eifache Valenzbindung oder eine Gruppe

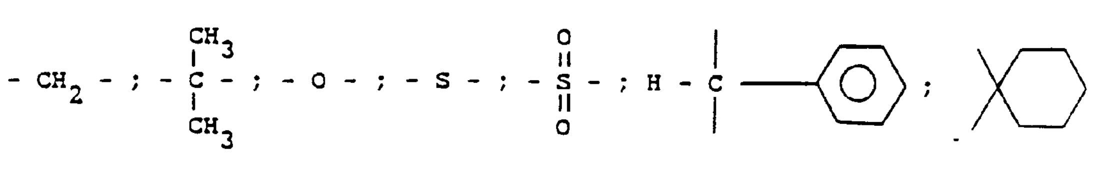

bedeuten;

- das Symbol B einen dreiwertigen Rest wiedergibt, der aus einem substituierten oder insubstituierten, aromatischen Rest mit zumindest 6 Kohlenstoffatomen oder aus zweien dieser Reste besteht, die miteinander über eine einfache Valenzbindung oder eine Gruppe - $CH_2$-;

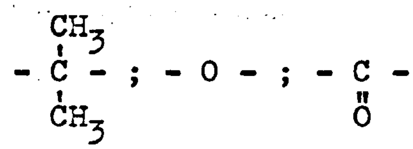

verbunden sind;

– das Symbol m die durchschnittliche Anzahl der wiederkehrenden Einheiten wiedergibt und zumindest 1 beträgt;

– die Symbole X, die identisch sind, jeweils einen Rest der Formel

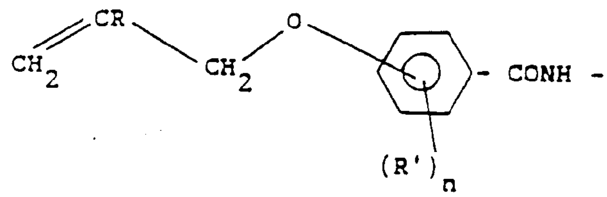 (II)

wiedergeben, worin

* R ein Wasserstoffatom oder einen Methylrest bedeutet; der (Meth)Allyloxyrest sich in ortho-, meta- oder para- Stellung in bezug auf das Kohlenstoffatom des Benzolrings, welches an die CONH-Gruppe gebunden ist, befindet;

* R′ für einen Methylrest steht;

* n eine ganze Zahl entsprechend 0, 1, 2 oder 3 ist,

2. Verfahren zur Herstellung der Polyamidimide gemäß Anspruch 1, dadurch gekennzeichnet, daß es darin besteht, das Erhitzen unter Arbeiten bei einer Temperatur von 50 bis 200°C und in Anwesenheit eines organischen Löungsmittels oder eines Gemisches organischer Lösungsmittel der folgenden Reagentien (i), (2i) und (3i) vorzunehmen, wobei die Reagentien gleichzeitig der Reaktion unterzogen werden:

– (i) ist ein Diisocyanat der Formel

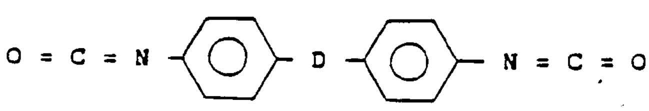 (III)

worin D die vorstehende, für Formel (I) angegebene Bedeutung besitzt;

– (2i) ist ein Tricarbonsäuremonoanhydrid der Formel

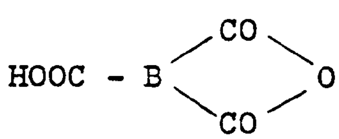 (IV)

worin B die vorstehend für die Formel (I) angegebene Bedeutung besitzt; und

– (3i) ist eine Monocarbonsäure, die durch eine Alkenyloxygruppe an dem an die Carboxygruppe geknüpften Rest substituiert ist, mit der Formel

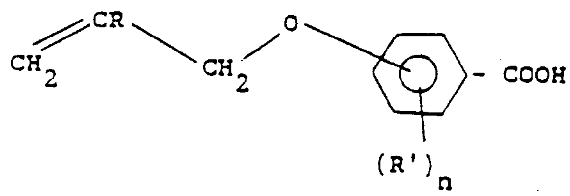

(V)

worin die Symbole R, R′ und n die vorstehend für Formel (II) angegebenen Bedeutungen besitzen;

– wobei die jeweiligen Anteile der Reagentien (i) und (2i) derart gewählt sind, daß das Verhältnis r

$$\frac{\text{Anzahl der Mole Diisocyanat (i)}}{\text{Anzahl der Mole Anhydrid (2i)}}$$

sich im Bereich von 1,05/1 bis 2/1 befindet;

– der Anteil des Reagens (3i) derart gewählt ist, daß das Verhältnis r′

$$\frac{\text{Anzahl der Mole Alkenyloxycarbonsäure(3i)}}{\text{Anzahl der Mole Diisocyanat (i)} - \text{Anzahl der Mole Anhydrid (2i)}}$$

dem Wert 2 entsprlcht.

3. Verfahren gemäß Anspruch 2, dadurch gekennzeichnet, daß das Diisocyanat (i) der Formel (III) ausgewählt wird unter

– 4,4′-Diisocyanato-2,2-diphenylpropan,
– 4,4′-Diisocyanato-diphenylmethan,
– 4,4′-Diisocyanato-biphenyl,
– 4,4′-Diisocyanato-diphenylsulfid,
– 4,4′-Diisocyanato-diphenylsulfon,
– 4,4′-Diisocyanato-diphenylether,
– 4,4′-Diisocyanato-1,1-diphenylcyclohexan.

4. Verfahren gemäß einem der Ansprüche 2 und 3, dadurch gekennzeichnet, daß das Tricarbonsäuremonoanhydrid (2i) der Formel (IV) ausgewählt wird unter dem

– Monoanhydrid der Trimellitsäure,
– 2,3-Monoanhydrid der 2,3,6-Naphthalintricarbonsäure,
– 1,8-Monoanhydrid der 1,8,4-Napthhalintricarbonsäure,
– 1,2-Monoanhydrid der 1,2,5-Naphthalintricarbonsäure,
– 3,4-Monoanhydrid der 3,4,4′-Diphenyltricarbonsäure,
– 3,4-Monoanhydrid der 3,4,3′-Diphenylsulfontricarbonsäure,
– 3,4-Monoanhydrid der 3,4,4′-Diphenylethertricarbonsäure,
– 3,4-Monoanhydrid der 3,4,4′-Benzophenontricarbonsäure,
– 3,4-Monoanhydrid der 3,4,3′-Diphenylisopropylidentricarbonsäure.

5. Verfahren gemäß einem der Ansprüche 2 bis 4, dadurch gekennzeichnet, daß die Monocarbonsäure mit Alkenyloxy-Substituenten (3i) der Formel (V) aüsgewählt wird unter

– 2-Allyloxybenzoesäure,
– 3-Allyloxybenzoesäure,
– 4-Allyloxybenzoesäure,
– 2-Methallyloxybenzoesäure,
– 3-Methallyloxybenzoesäure,
– 4-Metallyloxybenzoesäure.

6. Verfahren gemäß einem der Ansprüche 2 bis 5, dadurch gekennzeichnet, daß man die Ausgangsreagentien (i), (2i) und (3i), die gemeinsam eingesetzt werden, in einem organischen Lösungsmittel oder in einem Gemisch aus organischen Lösungsmitteln löst, wobei man in der Wärme zwischen 50 und 80°C arbeitet, wonach man die Temperatur der erhaltenen Lösung auf die gewünschte Temperatur, die höchstens 200°C beträgt, entweder direkt oder allmählich erhöht, wobei man im allgemeinen unter Atmosphärendruck während einer Dauer arbeitet, die innerhalb eines breiten Bereichs in Abhängigkeit der exakten, angewandten Temperaturbedingungen variieren kann.

7. Verfahren gemäß einem der Ansprüche 2 bis 6, dadurch gekennzeichnet, daß die eingesetzten Lösungsmittel der folgenden Gruppe entnommen werden: N,N-Dimethylacetamid, N,N-Dimethylformamid, N-Methyl-2-pyrrolidon, Dimethylsulfoxid, 1,1,3,3-Tetramethyharnstoff, 1,3-Dimethylharnstoff und einem Gemisch dieser Lösungsmittel.

8. Verwendung der funktionalisierten Polyamidimide gemäß Anspruch 1 zur Herstellung von versetzten

Polymeren durch Erhitzen auf eine temperatur zwischen 150 und 300°C in etwaiger Anwesenheit eines radikalischen Polymerisationsinitiators oder eines anionischen Polymerisationskatalysators.